# EUROPÄISCHE PATENTSCHRIFT

(11) **EP 0 980 780 B1**
(45) Veröffentlichungstag und Bekanntmachung des Hinweises auf die Patenterteilung: **06.10.2004**
(21) Anmeldenummer: 99113612.8
(22) Anmeldetag: 12.07.1999
(51) Int. Cl.: B60K 15/05, B60K 15/04

(54) **Verschlussanordnung für einen Einfüllstutzen eines Behälters, insbesondere eines Kraftstoffbehälters eines Kraftfahrzeugs**
Closure arrangement for filler neck of a container, especially a fuel tank of a motor vehicle
Système de fermeture pour la tubulure de remplissage pour un réservoir, notamment un réservoir de carburant pour véhicule automobile

(30) Priorität: 20.08.1998 DE 19837783
(43) Veröffentlichungstag der Anmeldung: 23.02.2000
(73) Patentinhaber: Volkswagen Aktiengesellschaft, 38436 Wolfsburg (DE)
(72) Erfinder: Krüger, Helmut, 38442 Wolfsburg (DE)
(74) Vertreter: Tergau & Pohl Patentanwälte

(56) Entgegenhaltungen:
- DE-A- 19 702 946
- DE-A- 19 746 236
- US-A- 3 478 922
- "FUEL FILLER CAP" RESEARCH DISCLOSURE, KENNETH MASON PUBLICATIONS, HAMPSHIRE, GB, Nr. 352, 1. August 1993 (1993-08-01), Seite 551 XP000395278 ISSN: 0374-4353

## Beschreibung

Die Erfindung betrifft eine Verschlußanordnung gemäß dem Oberbegriff des Patentanspruchs 1.

Die DE 197 46 236 A1 beschreibt eine Verschlußanordnung für den Einfüllstutzen eines Kraftstoffbehälters eines Kraftfahrzeugs, deren die Klappe enthaltender einer Verschluß außenseitig bündig mit der Karosserie des Kraftfahrzeugs verläuft, während der andere, Spreizlippen aufweisende elastische Verschluß gegenüber dem beschriebenen einen Verschluß in Richtung Kraftstoffbehälter versetzt im Mündungsbereich des Einfüllstutzens angeordnet ist. Diese bekannte Konstruktion bietet zwar einerseits den Vorteil, daß zum Öffnen der Verschlußanordnung keinerlei zusätzliche Handgriffe erforderlich sind, vielmehr die Zapfpistole beim Einführen selbsttätig beide Verschlüsse öffnet, jedoch ist das Dichtverhalten dieser bekannten Verschlußanordnung im Betrieb des Fahrzeugs, also bei herausgezogener Zapfpistole, nicht immer optimal. So ist es einerseits nicht leicht, mit einem elastische Elemente - dort Spreizlippen - als dichtungswirksame Teile enthaltenden Verschluß auch bei starken Erschütterungen, wie sie im Fahrbetrieb auftreten, gefülltem Tank und druckerhöhenden Temperaturen einen sicheren Abschluß gegen das Austreten von flüssigem und dampfförmigem Kraftstoff zu erzielen, und zum anderen können Staubkörnchen oder andere Verschmutzungen, die in den Dichtbereich der Klappe des karosserieseitigen Verschlusses gelangen, die Dichtwirkung dieses einen Verschlusses beeinträchtigen. Hinzu kommen konstruktive Schwierigkeiten, wie beispielsweise bei der Unterbringung einer Arretierung für die definierte Klappe; dazu muß in einem faltenbalgartigen, d.h. elastischen Übergangsstück zwischen Karosserie und Mündungsöffnung des Einfüllstutzens ein radial verschiebbarer Stift oder dergleichen untergebracht werden, der im geschlossenen Zustand der Klappe diese in einem Randbereich hintergreift und der mittels eines Antriebs, beispielsweise eines Bowdenzuges oder eines Antriebsmotors, radial nach außen bewegbar ist.

Verschlussanordnungen für Tankeinfüllstutzen von Kraftfahrzeugen mit zwei hintereinanderliegenden, unterschiedlich ausgeführten Verschlüssen sind beispielsweise auch aus der DE 35 44 782 A1 und der EP 0 579 145 A1 bekannt. In beiden Fällen enthalten diese Verschlussanordnungen übliche äußere aufgeschraubte Tankdeckel, die also zum Einführen der Zapfpistole entfernt werden müssen, und innere Verschlüsse mit geschlitzten Membranen, deren Lamellen sich im geschlossenen Zustand der Membrananordnung mit ihren Rändern überlappen. Auch hier ist also der elastische Verschluss der behältemähere der beiden Verschlüsse, d.h. er soll die Aufgabe der Abdichtung des Behälterinneren gegen den Austritt von flüssigem und dampfförmigem Kraftstoff verhindern.

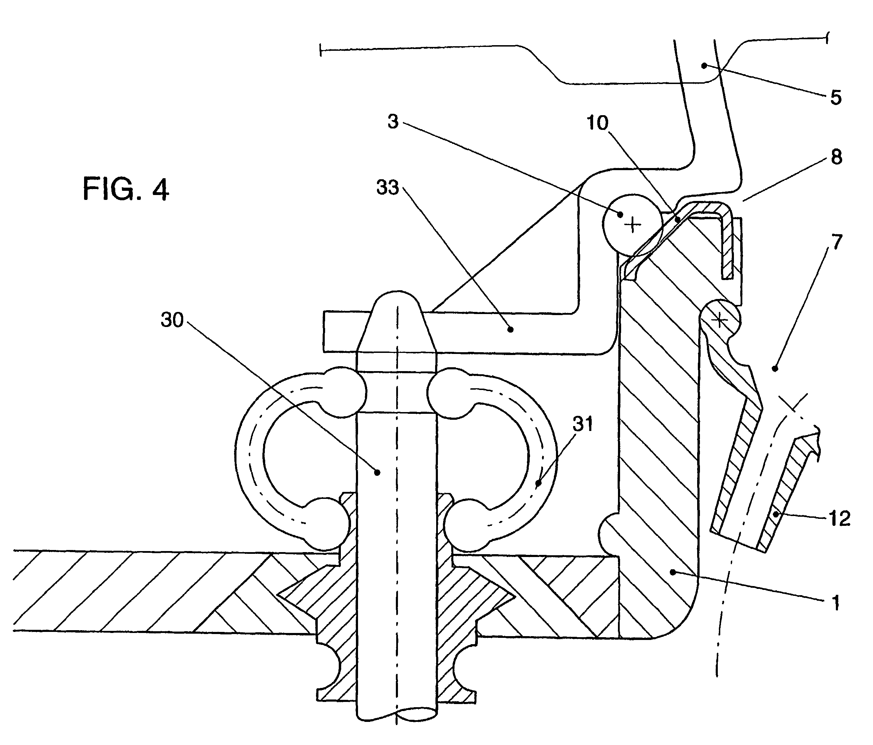

Fernerhin ist eine gattungsgemäße Verschlussanordnung zum dichten Abschluss eines Einfüllstutzens eines Kraftstoffbehälters eines Kraftfahrzeugs, mit zwei in Einführrichtung einer Zapfpistole geöffneten Verschlüssen bekannt, von denen einer eine zum Öffnen in Richtung auf den Kraftstoffbehälter schwenkbar angelenkte, zum Schließen durch Federkraft gegen einen Dichtsitz vorgespannte Klappe und der andere durch die Zapfpistole auseinanderspreizbare elastische Bereiche enthält ("Fuel filler cap", Research disclosure, Kenneth Mason Publications, Hampshire, GB, Nr. 352, 01.08.1993, Seite 551, die Figur 4).

Der Erfindung liegt die Aufgabe zugrunde, die gattungsgemäße Verschlussanordnung zu schaffen, die einerseits den Vorteil des selbsttätigen Öffnens beim Einführen der Zapfpistole bietet, andererseits im geschlossenen Zustand für eine einwandfreie Abdichtung des Behälters sorgt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Vorliegend dient also der elastische Verschluss zur Verhinderung des Zutritts von Staub und anderen Schmutzpartikeln zum Dichtbereich der Klappe des einen Verschlusses, dessen Klappe im geschlossenen Zustand über eine Dichtung und einen Dichtsitz ohne Behinderung durch Schmutzpartikel die Abdichtung des Behälterinhalts sicherstellt. Da dieser eine Verschluss der behältemähere ist, kann er in dem starren Einfüllstutzen angeordnet werden, wodurch sich wiederum die Möglichkeit ergibt, dieses starre Teil, das ohnehin vorhanden ist, praktisch nur unter Vorsehen eines abgedichteten Durchtritts zur Unterbringung der Arretierung für die Klappe auszunutzen. Die Dichtwirkung des anderen Verschlusses, also desjenigen mit auseinanderspreizbaren elastischen Bereichen, insbesondere ausgebildet als Membran mit Membranzungen, ist erfindungsgemäß derart gewährleistet, dass ihre sich überlappenden Randbereiche stufenartig ineinander greifen. Beim Einführen der Zapfpistole sowie beim elastischen Zurückgehen der Membranlamellen in ihre Schließstellungen gleiten nämlich die sich überlappenden Randbereiche aufeinander, wodurch dem Festsetzen von Schmutzpartikeln entgegengewirkt wird. Diese fallen herab beispielsweise in eine Mulde zwischen den beiden Verschlüssen, die zweckmäßigerweise so ausgebildet ist, dass ihr unterer Bereich in Richtung auf den anderen Verschluss und damit in Richtung nach außen geneigt ist, so dass herabgefallene Schmutzpartikel relativ leicht nach außen transportiert werden können.

Ein Vorteil der Erfindung ist darin zu sehen, dass sie die gestellte Aufgabe mit sehr einfachen Mitteln löst, nämlich im Prinzip durch die Reihenfolge von besonders ausgebildetem elastischem Verschluss und klappenbestücktem Verschluss. Dabei werden die Eigenheiten dieser beiden Verschlussarten optimal ausgenutzt, so dass beide Verschlüsse zusammen sich in ihren Wirkungen ergänzen und so eine echte Kombination bilden.

Ein Ausführungsbeispiel der Erfindung wird im folgenden anhand der Zeichnung für den bevorzugten Einsatzfall, nämlich eine Verschlussanordnung für den Einfüllstutzen eines Kraftstoffbehälters eines Kraftfahrzeugs, erläutert. Es zeigen:
- Figur 1: einen Längsschnitt durch den Bereich der Verschlussanordnung,
- Figur 2: die Ansicht des anderen Verschlusses gemäß dem Pfeil II in Figur 1,
- Figur 3: den Schnitt gemäß III-III in Figur 2 und
- Figur 4: eine besonders günstige Ausbildung eines Dichtsitzes für die Klappe des einen Verschlusses.

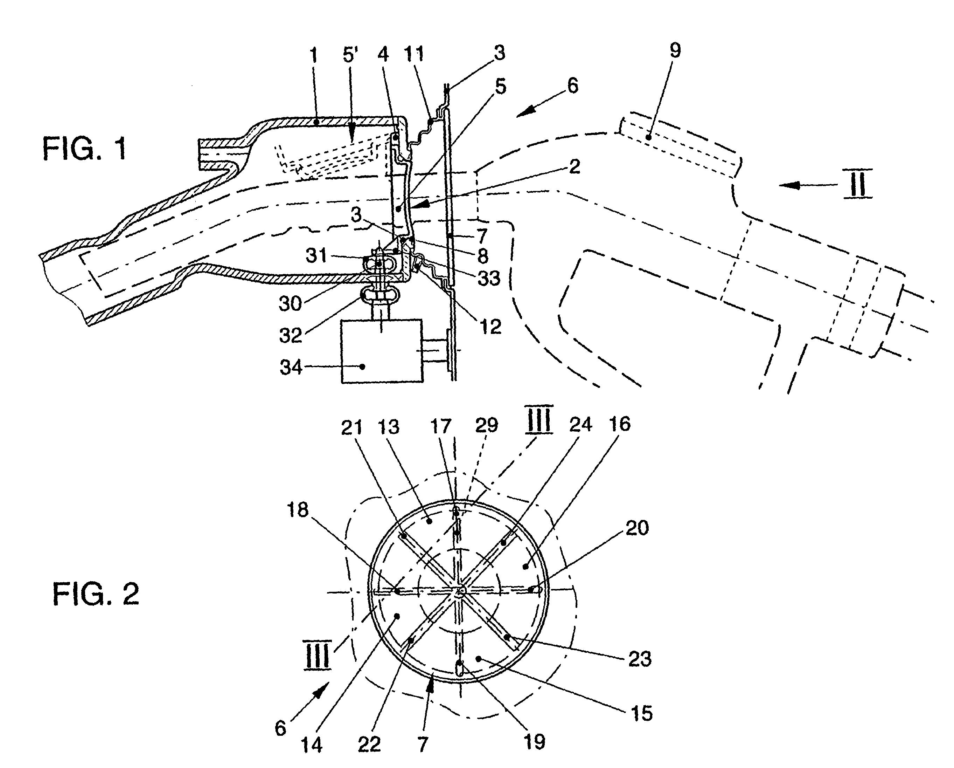

Betrachtet man zunächst Figur 1, so ist in dem Einfüllstutzen 1 des im übrigen nicht dargestellten Kraftstoffbehälters der eine Verschluss 2 mit der die Dichtung 3 tragenden, bei 4 schwenkbar gelagerten Klappe 5 ausgerüstet, deren Dichtung 3 ein Dichtsitz zugeordnet ist. Da der andere Verschluss 6 aus elastischem Material besteht, nämlich als noch zu beschreibende Membran 7 ausgebildet ist, ist im Bereich des einen Verschlusses 2 der metallene Stützring 8 für die Zapfpistole 9 (wenn diese eingeführt ist) vorgesehen, dessen Material härter gewählt ist als dasjenige der Zapfpistole und der in das in der Regel Kunststoff darstellende Material des Einfüllstutzens 1 eingesetzt ist. Dieser Stützring 8 besitzt eine nach außen offene U-ähnliche Querschnittsform, ist also relativ steif, und kann, wie in Figur 4 dargestellt, mit einem konischen Schenkel 10 zugleich den Dichtsitz für die umlaufende Dichtung 3 der Klappe 5 bilden, die formsteif ausgelegt ist.

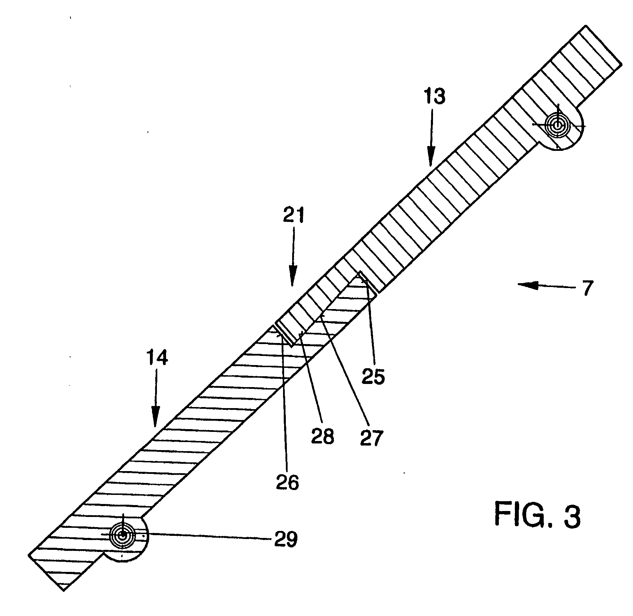

In Richtung nach außen versetzt - der Abstand ist durch die faltenbalgartig ausgebildete Mulde 11 mit dem Kraftstoffauslauf 12 überbrückt - erkennt man den anderen Verschluss 6 mit der Membran 7. Sie enthält in diesem Ausführungsbeispiel gemäß Figur 2 vier Lamellen 13, 14, 15 und 16, die auf der in Figur 1 nach links weisenden Seite der Membran 7 mit radialen Verstärkungsrippen 17, 18, 19 und 20 versehen sind und deren Randbereiche sich bei geschlossenem Verschluß gegenseitig etwas überlappen. Diese sich überlappenden Randbereiche sind in Figur 2 mit 21, 22, 23 und 24 gekennzeichnet; Figur 3 zeigt einen Schnitt durch die Überlappung 21 der einander zugekehrten Randbereiche der Lamellen 13 und 14. Man erkennt, daß die Randbereiche stufenförmig mit Stufen 25 und 26 ineinandergreifen, wobei die radial verlaufenden Überlappungsflächen 27 und 28 etwas gegen die Hauptebene der Membran 7 geneigt sind. Diese Konstruktion gewährleistet einerseits eine gute Dichtwirkung durch Ausnutzung der Elastizität des Materials der Lamellen; andererseits erfolgt bei Übergang von der Schließstellung zur Öffnungsstellung und umgekehrt ein Reiben der Flächen 27 und 28 aufeinander, wodurch dort etwa befindliche Schmutzteilchen entfernt werden. Diese Schmutzteilchen fallen entweder direkt nach außen oder in die Mulde 11, deren unterer Bereich (siehe Figur 1) in Richtung nach außen geneigt ist und keine in dieser Richtung wirksamen Hinterschnitte besitzt, so daß die Schmutzteilchen entweder von selbst oder beim Reinigen der Mulde 11 nach außen transportiert werden.

Auf ihrer dem einen Verschluß 2 zugekehrten Seite ist in dem gezeigten Ausführungsbeispiel die Membran 7 mit dem Biegefederstab 29 ausgerüstet. Alle Rippen 17 bis 20 können derartige jeweils bis zur Membranmitte reichende Federstäbe enthalten.

Ein Arretierstift 30 (siehe Figur 1) ist, abgedichtet durch Faltenbälge 31 (Flüssigkeits- und Gasdichtung) und 32 (Staubdichtung), durch die Wand des Einfüllstutzens 1 hindurchgeführt. Er greift in eine Ausnehmung in dem Ansatz 33 der Klappe 5 ein und sichert diese gegen Verschwenken in ihre Öffnungsstellung 5', bis er mittels des Antriebs 34 in Figur 1 nach unten, d.h. radial aus dem Schwenkbereich des Ansatzes 33 entfernt wird. Zur Unterbringung dieses Arretierstifts 30 brauchen also keine zusätzlichen starren Teile vorgesehen zu sein.

Mit der Erfindung ist demgemäß eine gattungsgemäße Verschlußanordnung geschaffen, die produktionsfreundlich ist und mit einfachen Mitteln eine zuverlässige hohe Dichtwirkung gewährleistet.

## Patentansprüche

1. Verschlussanordnung zum dichten Abschluss eines Einfüllstutzens (1) eines Behälters, insbesondere eines Kraftstoffbehälters eines Kraftfahrzeugs, mit zwei in Einführrichtung einer Zapfpistole (9) zum Betanken hintereinanderliegenden, durch die Zapfpistole (9) geöffneten Verschlüssen (2, 6), von denen der eine Verschluss (2) eine zum Öffnen in Richtung auf den Behälter schwenkbar angelenkte, zum Schließen durch Federkraft gegen einen Dichtsitz vorgespannte Klappe (5) und der andere Verschluss (6) durch die Zapfpistole (9) auseinanderspreizbare elastische Bereiche enthält, wobei der eine Verschluss (2) als bezüglich des Behälterinhalts dichter Verschluss (2) behälternäher als der andere Verschluss (6) angeordnet ist, der primär einen Verschluss (6) gegen den Zutritt von Schmutz zu dem einen Verschluss (2) bildet, **dadurch gekennzeichnet, dass** der andere Verschluss (6) als elastische Bereiche Lamellen (13, 14, 15, 16) enthält, deren einander zugekehrte Randbereiche (21, 22, 23, 24) bei geschlossenem Verschluss (6) einander elastisch dichtend berühren, indem die Querschnitte durch die Lamellen (13, 14, 15, 16) in ihren Randbereichen stufenartig (25, 26) ausgebildet sind.

2. Verschlussanordnung nach Anspruch 1, **dadurch gekennzeichnet, dass** der andere Verschluss (6) bei einem Tankbehälter eines Kraftfahrzeugs zumindest annähernd in der Karosserieaußenebene desselben liegt.

3. Verschlussanordnung nach Anspruch 1 oder 2, **dadurch gekennzeichnet, dass** der andere Verschluss (6) zumindest auf seiner dem einen Verschluss (2) abgekehrten Seite eine ebene Oberfläche hat.

4. Verschlussanordnung nach einem der Ansprüche 1 bis 3, **dadurch gekennzeichnet, dass** sich zwischen den beiden Verschlüssen (2, 6) eine Mulde (11) erstreckt, deren in Einbaulage unterer Bereich in Richtung auf den anderen Verschluss (6) geneigt ist, und keine Hinterschnitte besitzt.

5. Verschlussanordnung nach Anspruch 4, **dadurch gekennzeichnet, dass** die Mulde als sich im Längsschnitt durch die Mulde in Richtung auf den anderen Verschluss (6) erweiternder Faltenbalg (11) ausgebildet ist.

6. Verschlussanordnung nach Anspruch 5, **dadurch gekennzeichnet, dass** der Faltenbalg (11) zumindest in dem unteren Bereich frei von in Richtung auf den anderen Verschluss (6) wirksamen Hinterschnitten ist.

7. Verschlussanordnung nach einem der Ansprüche 1 bis 6, **dadurch gekennzeichnet, dass** der eine Verschluss (2) im Bereich seines Dichtsitzes einen den Durchströmquerschnitt definierenden metallenen Stützring (8) für die eingeführte Zapfpistole (9) aufweist.

8. Verschlussanordnung nach Anspruch 7, **dadurch gekennzeichnet, dass** der Stützring (8) ein U-ähnliches, radial nach außen offenes Querschnittsprofil aufweist.

9. Verschlussanordnung nach Anspruch 8, **dadurch gekennzeichnet, dass** der der Klappe (5) zugekehrte Schenkel (10) des U-ähnlichen Querschnittsprofils als Dichtsitz für eine umlaufende klappenseitige Dichtung (3) konisch verläuft.

10. Verschlussanordnung nach einem der Ansprüche 1 bis 9, **dadurch gekennzeichnet, dass** eine Arretierung (30) für die Klappe (5) des einen Verschlusses (2) in der Wand des Einfüllstutzens (1) gelagert ist.

## Claims

1. Closure arrangement for sealing a filler neck (1) of a container, in particular a fuel tank of a motor vehicle, comprising two closures (2, 6) located one behind the other in the insertion direction of a nozzle gun (9) for fuelling and opened by the nozzle gun (9), of which closures one closure (2) contains a butterfly valve (5) pivotally articulated for opening in the direction of the container and biased against a seat by spring force for closing, and the other closure (6) contains resilient regions which can be spread apart by the nozzle gun (9), the one closure (2) being arranged closer to the container than the other closure (6) as a closure (2) tight with respect to the container contents and primarily forming a closure (6) against the ingress of dirt to the one closure (2), **characterised in that** the other closure (6) contains lamellae (13, 14, 15, 16) as resilient regions, of which mutually facing edge regions (21, 22, 23, 24) touch one another in a resilient sealing manner when the closure (6) is closed, **in that** the cross-sections are formed through the lamellae (13, 14, 15, 16) in their edge regions in a graduated (25, 26) manner.

2. Closure arrangement according to claim 1, **characterised in that** in a tank container of a motor vehicle the other closure (6) is located at least approximately in the car body outer plane thereof.

3. Closure arrangement according to claim 1 or 2, **characterised in that** the other closure (6) has a plane surface, at least on its side remote from the one closure (2).

4. Closure arrangement according to any one of claims 1 to 3, **characterised in that** between the two closures (2, 6 ) there extends a trough (11), of which the, in the fitted position, lower region is inclined in the direction of the other closure (6) and does not have any undercuts.

5. Closure arrangement according to claim 4, **characterised in that** the trough is constructed as a bellows (11) expanding in the longitudinal section through the trough in the direction of the other closure (6).

6. Closure arrangement according to claim 5, **characterised in that**, at least in the lower region, the bellows (11) are free from undercuts acting in the direction of the other closure (6).

7. Closure arrangement according to any one of claims 1 to 6, **characterised in that**, in the region of its seat, the one closure (2) has a metal bearing ring (8), for the introduced nozzle gun (9), which defines the through-flow cross-section.

8. Closure arrangement according to claim 7, **characterised in that** the bearing ring (8) comprises a U-like radially externally open cross-sectional profile.

9. Closure arrangement according to claim 8, **characterised in that** the leg (10), facing the butterfly valve (5), of the U-like cross-sectional profile extends conically as a seat for a circumferential butterfly valve-side seal (3).

10. Closure arrangement according to any one of claims 1 to 9, **characterised in that** a lock (30) for the butterfly valve (5) of the one closure (2) is mounted in the wall of the filler neck (1).

## Revendications

1. Dispositif de fermeture pour fermer de manière étanche une tubulure de remplissage (1) d'un réservoir, notamment d'un réservoir de carburant d'un véhicule automobile, avec deux fermetures (2, 6) ouvertes par un pistolet à essence (9), disposées à la suite l'une de l'autre en direction d'introduction du pistolet à essence (9) pour mettre de l'essence, la fermeture (2) contenant un volet (5) prétendu articulé de manière pivotante pour s'ouvrir en direction du réservoir, pour se fermer par la force d'un ressort contre un logement étanche, et l'autre fermeture (6) contenant des zones élastiques pouvant être écartées par le pistolet à essence (9), moyennant quoi la fermeture (2), plus proche du réservoir que l'autre fermeture (6), est agencée comme une fermeture (2) étanche par rapport au contenu du réservoir qui forme avant tout une fermeture (6) pour empêcher que les saletés n'entrent en direction de la fermeture (2), **caractérisé en ce que** l'autre fermeture (6) contient des lamelles (13, 14, 15, 16) qui servent de zones élastiques, les zones de bordure (21, 22, 23, 24) desdites lamelles adjacentes les unes par rapport aux autres se touchant de manière étanche et élastique les unes par rapport aux autres lorsque la fermeture (6) est fermée, les sections transversales étant configurées de manière étagée (25, 26) dans leurs zones de bordure par les lamelles (13, 14, 15, 16).

2. Dispositif de fermeture selon la revendication 1, **caractérisé en ce que** l'autre fermeture (6) repose au niveau d'un réservoir de remplissage d'un véhicule automobile au moins plus proche dans le plan extérieur de la carrosserie de celui-ci.

3. Dispositif de fermeture selon la revendication 1 ou 2, **caractérisé en ce que** l'autre fermeture (6) a au moins une surface plane sur son côté opposé à la fermeture (2).

4. Dispositif de fermeture selon l'une quelconque des revendications 1 à 3, **caractérisé en ce qu'**une creux en forme d'auge (11) s'étend entre les deux fermetures (2, 6), la zone inférieure dudit creux en forme d'auge étant inclinée en direction de l'autre fermeture (6) en position de montage et ne possédant pas de section arrière.

5. Dispositif de fermeture selon la revendication 4, **caractérisé en ce que** le creux en forme d'auge est configuré comme un soufflet (11) s'élargissant en section longitudinale à travers le creux en forme d'auge en direction de l'autre fermeture (6).

6. Dispositif de fermeture selon la revendication 5, **caractérisé en ce que** le soufflet (11) est sans section arrière effective, au moins dans la zone inférieure, en direction de l'autre fermeture (6).

7. Dispositif de fermeture selon l'une quelconque des revendications 1 à 6, **caractérisé en ce que** la fermeture (2) présente, dans la zone de son logement étanche, une bague d'appui (8) métallisée définissant la section transversale d'écoulement de l'essence pour le pistolet à essence (9) introduit.

8. Dispositif de fermeture selon la revendication 7, **caractérisé en ce que** la bague d'appui (8) présente un profil en section transversale en U, radialement ouvert vers l'extérieur.

9. Dispositif de fermeture selon la revendication 8, **caractérisé en ce que** la barre (10) orientée vers le volet (5) du profil en section transversale en U s'étend de manière conique et sert de logement étanche pour le joint (3) côté volet.

10. Dispositif de fermeture selon l'une quelconque des revendications 1 à 9, **caractérisé en ce qu'**un dispositif d'arrêt (30) est disposé dans la paroi de la tubulure de remplissage (1) pour le volet (5) de la fermeture (2).
